# EUROPEAN PATENT APPLICATION

(11) **EP 1 225 285 A2**
(43) Date of publication of application: **24.07.2002**
(21) Application number: 02250469.0
(22) Date of filing: 23.01.2002
(51) Int. Cl.: E04D 13/00, E04D 13/12, E04D 11/00

(54) **Improvements in or relating to installations**

(30) Priority: 23.01.2001 GB 0101710
(71) Applicant: SWINTEX LIMITED, Bury Lancashire BL9 9NX (GB)
(72) Inventor: Houghton, Harry Vincent, Bolton BL7 9EW (GB)
(74) Representative: Wilson Gunn M'Caw

(57) **Abstract**

An article, particularly a cable tray 1, for installation on a flat roof 12 of a building. The article has an underside 10 and a side wall 11 extending upwards from the underside. A first part of a piece of fabric 9 extends over at least a part of the underside of the article and a second part of the piece of fabric extends over at least part of the side wall of the article. The fabric acts as a cushion reducing the risk of damage to a surface on which an article is installed. The fabric also acts as a wick operative to draw moisture away from between an article and a surface on which it is installed. The fabric may comprise hydrophilic material, such as polyester, and may be non-woven. The article may be moulded and the fabric incorporated into the article during moulding.

## Description

The present invention relates to articles for installation on a flat roof of a building, a method of installing an article on a surface, particularly but not exclusively a flat roof of a building, and to such installations.

Flat roofed buildings typically comprise a waterproof membrane. These membranes are expensive and typically expected to last for at least twenty years.

It is often desirable for articles to be installed on a flat roof of a building, such as cable trays for supporting cables running over a flat roof to a telecommunications antenna. Traditional lightweight cable trays are usually installed on a flat roof by bolting them to concrete flag stones laid loose on the roof. Heavier moulded cable trays, such as those described in the applicant's UK patent application nos. 0024988.8 and 0024990.4 which include means for receiving ballast, are usually laid directly onto a flat roof.

A problem with cable tray and other installations on flat roofs is that they can lead to premature failure of the roof membrane. It has been found that there are two main reasons for this.

Firstly, placing an object onto a flat roof can puncture the roof membrane, especially if the object has well defined edges or corners and/or if the object is walked upon. Cable tray installations may serve as walkways.

Secondly, water can become trapped between an article placed on a flat roof and the roof. This can cause water to remain in contact with the roof beneath the article for much longer periods than for exposed areas of the roof. Prolonged presence of water is favourable to biological growth activity which is generally prejudicial to the life expectancy of a roof membrane. Weakening of a roof membrane caused by biological growth activity also increases the risk of the membrane being punctured.

It is an object of the present invention to overcome, or at least reduce, these problems.

According to a first aspect of the present invention there is provided an article for installation on a flat roof of a building, the article comprising an underside on which it is intended to be supported and a side wall extending at an angle to the underside wherein a first part of a piece of fabric extends over at least part of the underside of the article and a second part of the piece of fabric extends over at least part of the side wall of the article.

According to a second aspect of the present invention there is provided a method of installing an article on a surface comprising the steps of interposing a first part of a piece of fabric between the article and the surface so that a second part of the piece of fabric extends out from between the article and the surface, and supporting the second part of the piece of fabric so that it extends away from the surface.

According to a third aspect of the present invention there is provided an installation comprising an article on a surface wherein a first part of a piece of fabric extends between the article and the surface and a second part of the piece of fabric extends out from between the article and the surface and away from the surface.

Provision of the fabric confers two major benefits. The fabric acts as a cushion reducing the risk of damage to a surface on which an article is installed. The fabric also acts as a wick operative to draw moisture away from between an article and a surface. Provision of a part of the fabric extending away from the surface enhances the wicking and drying functions of the fabric by providing an increased area from which moisture can evaporate and reducing the risk of the entire piece of fabric being underwater, for example on a waterlogged roof. Thus the fabric can enhance the drying rate of a waterlogged roof.

Preferably the article is supported on a generally horizontal surface. The second part of the fabric preferably extends generally upwardly from the surface, more preferably to at least 10mm and still more preferably to at least 20mm above the surface.

The fabric preferably has good wicking properties and as such preferably comprises some hydrophilic material. Polyester is hydrophilic and the fabric preferably comprises some polyester fibres. The fabric is preferably non-woven, such fabrics generally being cheaper than woven or knitted fabrics which could, however, equally be used. The fabric preferably extends completely over the underside of the article. As the preferred thickness of fabric to provide adequate cushioning properties may be greater than required to provide adequate wicking properties the first part of the piece of fabric may be thicker than the second part.

The fabric is preferably fastened to or comprised in the article. This enables an article and associated fabric to be shipped and installed as a single item. The fabric may be fastened to the article by an adhesive and/or by fasteners, for example staples. The fabric could be incorporated into the article.

In a preferred embodiment the article is a moulded article and the fabric is incorporated into the article during moulding. In one example articles are moulded from a plastics material, for example recycled partially plasticised PVC, using the process known as compression moulding. This involves placing molten or partially molten plastics material into a mould tool which is subsequently closed by a press. To incorporate the fabric during moulding the fabric is placed into the mould tool so that it is between molten plastics material in the tool and the part of the tool wall corresponding to the part of the outside of the finished moulded article at which the fabric is to be located. The fabric may be temporarily held in position in the mould tool by suitable fasteners, for example pins or clips. The mould tool is then closed in the usual way to form the article. When it solidifies the plastics material becomes adhered to the fabric so that the fabric is incorporated into the outside surface of the moulded article.

Where the fabric is incorporated into an article during moulding it is important that the fabric is chosen so that it exhibits adequate cushioning and wicking properties after moulding. Where synthetic fibres are comprised in the fabric it is important that those fibres have a melting point which is greater than that of the material used to form the article. For example where the article is formed from plasticised PVC polyester fabrics are suitable. Plasticised PVC moulding temperatures are typically between 140 and 190°C. The melting point of suitable polyester fabrics is typically between 225 and 265°C.

It has been found that some fabrics improve their wicking characteristics when moulded into an article. Non-woven polyester fabrics comprised of fibres of between about 12 and 30 Decitex and particularly between 15 and 25 Decitex are preferred. The mass of the fabric is preferably between 150 and 500g/m², more preferably between 250 and 400g/m². The thickness of the fabric is preferably in the range 3.5 to 7mm prior to moulding. It is preferable that the fabric has undergone carding, cross-folding of multilayers and needle teasing to achieve a layer bond.

Two preferred fabrics are manufactured by Lantor (UK) Limited and sold under grade references 4906 and 4918. Grade reference 4906 is particularly preferred.

To illustrate the properties of these fabrics comparative tests were performed. Three similarly sized strips of each of fabric grades 4906, 4918 and other grades were prepared. One strip of each fabric was moulded onto a PVC moulding using the compression moulding process described above and allowed to condition for twenty four hours. All the strips were then mounted upright so that one end of each strip was simultaneously immersed to 15mm of its length in water. The two non-moulded strips of each fabric type were mounted with their machine directions extending in upright and generally horizontal directions respectively. The moulded strips were mounted with their machine direction extending in an upright direction. After thirty seconds the height to which the water had risen on each moulded strip was noted. After 60 seconds the height to which the water had risen on each non-moulded strip was also noted. The results of the test are shown below.

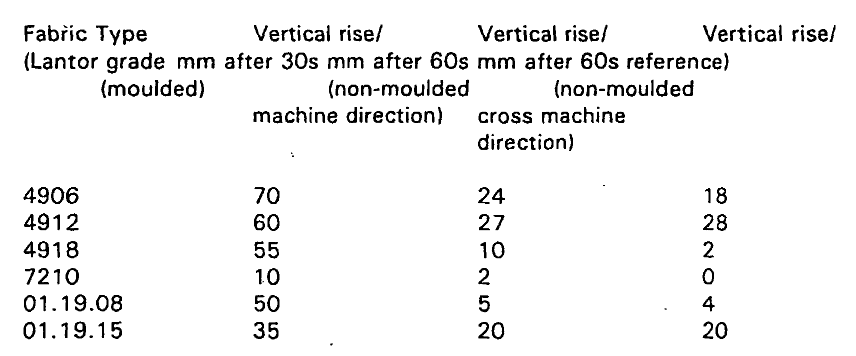

The wicking properties of some fabric types considerably improved following moulding, both in terms of the height reached by the water and the time taken to reach that height. The considerable and unexpected improvement in wicking properties of some of the fabrics makes them especially suited for use in the manufacture of articles according to the invention.

Further details about some of the tested fabric types are given below:

| Fabric Type (Lantor grade reference) | mass/gm⁻² | approximate thickness/ mm (before moulding) | fibre Decitex |
|---|---|---|---|
| 4906 | 329 | 5.6 | 17 (polyester) |
| 4912 | 400 | 5.0 | 70% 5.3 (polyester) |
| | | | 30% 4.4 (polyester) |
| 4918 | 339 | 6.5 | 28 (polyester) |

A single layer of fabric of preferred type is usually found sufficient to significantly reduce the risk of puncture of a roof membrane. Should additional cushioning be required, however, one or more additional layers of fabric may be included, preferably only to the underside of the article. Any additional layers may be bonded to the first layer, for example by placing pellets of a warm melt polyurethane adhesive between layers of fabric prior to incorporation of the fabric in the article by moulding.

In one embodiment a first layer of hydrophilic fabric extends over the underside and side wall of an article and a second layer of hydrophobic fabric extends over the first layer of fabric on the underside of the article and, optionally, partially over the first layer of fabric on the sidewall.

The provision of an outer layer of hydrophobic fabric on the outside of the underside of the article is thought to reduce penetration of water between the underside of the article and a surface on which it is supported, whilst still permitting a wicking action to occur. Any water that is trapped under the article will be physically forced through the outer hydrophobic layer and wicked away by the hydrophilic layer.

The hydrophilic layer preferably extends further up the side wall of the article than the hydrophobic layer.

The hydrophobic layer employed may be a much thinner layer than the hydrophilic layer. Suitable preferred materials for use in this fabric layer are polypropylene and polyethylene although others can also be used. As this hydrophilic layer does not come into intimate contact with the molten or partially molten material of the moulding and is in intimate contact with the cooled tooling surface, the melt temperature characteristics are not found to be as critical as those of the hydrophilic layer. The presence of this hydrophobic layer encourages the movement of water away from intimate contact with the roof surface and into the layer of the wicking fabric. Any water present will be repelled in the hydrophobic layer and preferentially drawn into the hydrophilic layer.

Use of a fabric, in accordance with the invention, significantly reduces biological growth. This may be further reduced by incorporating a biocide/fungicide in the fabric.

Although particularly concerning cable trays the invention applies equally to other articles, for example cantiledge weights and ballast blocks.

Although the invention is particularly concerned with compression moulded articles it applies equally to articles made by other techniques. One example is reactional moulding where a granular material such as crumbed motor tyres is coated with a polyurethane or similar liquid binder material prior to introduction into a mould where the binder material is allowed to set. If a fabric is placed into a mould used for reactional moulding there is a risk that the fabric will become impregnated with the binder material, reducing its wicking performance. This problem can be reduced by providing a barrier layer in the fabric, for example a plastics film such as a polyethylene or polyester film. The barrier layer is preferably placed adjacent one side of the fabric and the fabric disposed so that the barrier layer is directed towards the inside of the mould. A barrier layer prevents or largely reduces the likelihood of the fabric being impregnated by the binder material during moulding.

A barrier layer may also be similarly used between the fabric layer and a plasticised PVC moulding if it is desirable to reduce or prevent possible migration of plasticisers in either direction between roof membrane materials and the moulding. In such situations polyethylene or more preferably polyester films between 12.5 and 150.0 microns are effective, but films between 12.5 and 50.0 microns are most cost effective. Bonding of the polyester film to the moulding can be assisted using warm melt adhesive pellets as previously described.

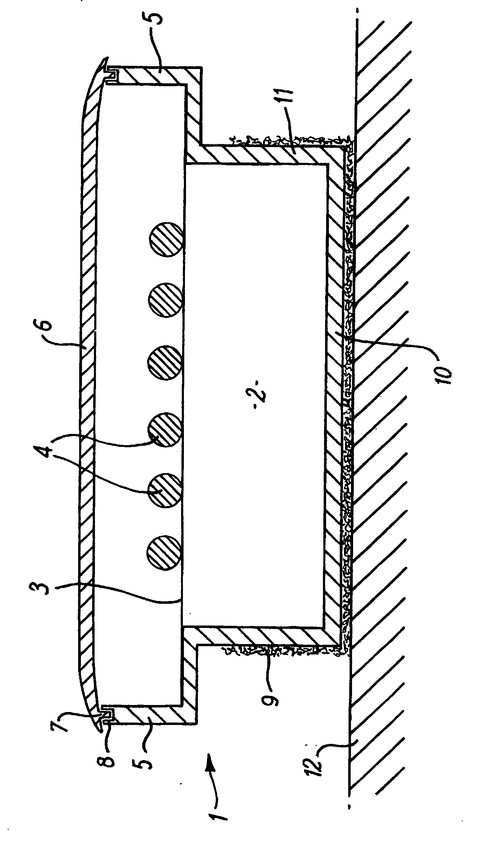

In order that the invention may be more clearly understood an embodiment thereof will now be described by way of example with reference to the accompanying drawing, the single figure of which shows a transverse cross-sectional view through a cable tray installation.

Referring to the figure a cable tray 1 is compression moulded from recycled partially plasticised PVC. The cable tray 1 defines a partially enclosed region 2 for receiving ballast. Webs 3 extending in the partially enclosed region 2 define a surface for supporting cables 4. Upper side walls 5 extend upwardly from the surface for supporting cables and a cover 6 extends between the upper side walls 5. Projections 7 on the underside of the cover 6 are received into channels 8 running along the top edge of each upper side wall 5.

When the cable tray 1 is moulded a piece of non-woven polyester fabric 9 of mass approximately 329g/m², thickness approximately 5.0mm and composed of fibres of approximately 17 Decitex incorporating a biocide is placed into the region of the mould tool corresponding to the underside 10 and lower side walls 11 of the cable tray. Plastics material is then placed into the tool, onto the fabric, and the tool closed to form the cable tray. As the tray is formed the fabric 9 adheres to the plastics material so that it extends over the outside of the underside 10 and lower side walls 11 of the cable tray 1. The fabric 9 extends about 60mm up the lower side walls 11 of the cable tray 1.

The cable tray 1 is supported on a flat roof 12 of a building. The roof 12 incorporates a waterproof membrane.

The fabric 9 covered underside 10 of the cable tray contacts the surface of the flat roof 10. The fabric 9 provides some cushioning between the roof 12 and the remainder of the cable tray 1 and considerably reduces the risk of the cable tray 1 puncturing the roof membrane compared to a similar cable tray without fabric.

The fabric 9 has good wicking properties. Any water between the cable tray 1 and the surface of the roof 12 will tend to be absorbed by the fabric 9 and travel along the fabric 9 extending up the lower side walls 11 of the cable tray 1, from where it can evaporate. This considerably reduces the risk of water becoming trapped between the cable tray 1 and roof 12 for an extended period compared to a similar cable tray without fabric. This results in a lower incidence of biological growth activity. As the fabric 9 extends up the lower side walls 11 of the cable tray water can evaporate from the fabric 9 even when there is standing water on the roof 12, provided, of course, that this does not exceed the height of the fabric 9 above the roof 12. The fabric extending up the lower side walls tends to be washed by rain removing accumulated dirt particles from the fabric and maintaining its wicking properties.

The above embodiment is described by way of example only. Many variations are possible without departing from the invention.

## Claims

**1.** An article for installation on a flat roof of a building, the article comprising an underside on which it is intended to be supported and a side wall extending at an angle to the underside wherein a first part of a piece of fabric extends over at least part of the underside of the article and a second part of the piece of fabric extends over at least part of the side wall of the article.

**2.** An article as claimed in claim 1, wherein the fabric extends over the side wall of the article such that when the underside of the article is supported on a surface the fabric extends at least 10mm above the surface.

**3.** An article as claimed in either claim 1 or 2, wherein the fabric comprises some hydrophilic material.

**4.** An article as claimed in claim 3, wherein the fabric comprises some polyester fibres.

**5.** An article as claimed in any preceding claim, wherein the fabric is non-woven.

**6.** An article as claimed in any preceding claim, wherein the fabric extends completely over the underside of the article.

**7.** An article as claimed in any preceding claim, wherein the fabric is fastened to or comprised in-the article.

**8.** An article as claimed in any preceding claim, wherein the article is a moulded article and the fabric is at least partially incorporated into, or attached to, the article during moulding.

**9.** An article as claimed in claim 8, wherein the fabric is selected so that its wicking properties improve after being incorporated into, or attached to, the article.

**10.** An article as claimed in either claim 8 or 9 moulded from a plastics material.

**11.** An article as claimed in any of claims 8 to 10. wherein any synthetic fibres comprised in the fabric have a melting point which is greater than that of the material used to form the article.

**12.** An article as claimed in any of claims 8 to 11, wherein the fabric is non-woven and comprises fibres of between 12 and 30 Decitex.

**13.** An article as claimed any of claims 8 to 12, wherein the thickness of the fabric is in the range 3.5 to 7mm prior to moulding.

**14.** An article as claimed in any preceding claim, wherein the mass of the fabric is between 150 and 500g/m².

**15.** An article as claimed in any preceding claim, wherein a first layer of hydrophilic fabric extends over the underside and side wall of the article and a second layer of hydrophobic fabric extends over the first layer of fabric on the underside of the article.

**16.** An article as claimed in any preceding claim, wherein the fabric includes a biocide and/or fungicide.

**17.** An article as claimed in any preceding claim, wherein the article is a cable tray.

**18.** A method of installing an article on a surface comprising the steps of interposing a first part of a piece of fabric between the article and the surface so that a second part of the piece of fabric extends out from between the article and the surface, and supporting the second part of the piece of fabric so that it extends away from the surface.

**19.** A method as claimed in claim 18, wherein the second part of the fabric is supported so that it extends generally upwardly at least 10mm from the surface.

**20.** A method as claimed in either claim 18 or 19, wherein the fabric comprises some hydrophilic material.

**21.** A method as claimed in claim 20, wherein the fabric comprises some polyester fibres.

**22.** A method as claimed in any of claims 18 to 21, wherein the fabric is non-woven.

**22.** A method as claimed in any of claims 18 to 22, wherein the fabric is fastened to or comprised in the article.

**24.** A method as claimed in any of claims 18 to 23, wherein the fabric is comprised of fibres of between 12 and 30 Decitex.

**25.** A method as claimed in any of claims 1 to 24 comprising the steps of moulding the article and at least partially incorporating the fabric into, or attaching the fabric to, the article during moulding.

**26.** A method as claimed in claim 25, wherein the fabric is selected so that its wicking properties improve after being incorporated into, or attached to, the article.

**27.** A method as claimed in either claim 25 or 26, wherein the thickness of the fabric is in the range 3.5 to 7mm prior to moulding.

**28.** An installation comprising an article on a surface wherein a first part of a piece of fabric extends between the article and the surface and a second part of the piece of fabric extends out from between the article and the surface and away from the surface.

**29.** An installation comprising an article as claimed in any of claims 1 to 17 on a surface.
